# EUROPEAN PATENT SPECIFICATION

(11) **EP 4 018 032 B1**
(45) Date of publication and mention of the grant of the patent: **28.02.2024**
(21) Application number: 20765336.1
(22) Date of filing: 28.08.2020
(51) Int. Cl.: D06N 3/00, D04H 5/03, D04H 1/4382, D04H 1/492, D04H 1/498, B32B 5/02, B32B 5/06, B32B 7/09

(54) **SHEET MATERIAL**
BLATTMATERIAL
MATÉRIAU EN FEUILLE

(30) Priority: 30.08.2019 GB 201912516
(43) Date of publication of application: 29.06.2022
(73) Proprietor: Generation Phoenix Limited, Alwalton Hill, Peterborough PE7 3HH (GB)
(72) Inventor: WANG, Jianhua, Peterborough PE3 8TZ (GB); KRZYZANIAK, Joanna, Peterborough PE3 8TZ (GB); FRANKLIN, Veronica, Peterborough PE3 8TZ (GB)
(74) Representative: Swindell & Pearson Limited
(86) International application number: PCT/GB2020/052059
(87) International publication number: WO 2021/038233

(56) References cited:
- EP-A1- 1 028 186
- EP-A1- 1 900 870
- WO-A1-2006/001739
- WO-A1-2014/099884
- WO-A1-2017/032778
- WO-A1-2019/166167
- WO-A2-2004/092472
- US-A1- 2004 010 895

## Description

### TECHNOLOGICAL FIELD

Examples of the disclosure relate to a method of forming a sheet material, a subsequently formed sheet material and an arrangement from which a sheet material is formed.

### BACKGROUND

It is known to form sheet materials using hydroentanglement by subjecting an arrangement comprising a body of fibres to high pressure jets of liquid to interlock the fibres together by entanglement. In some instances, the body of fibres may be mechanically bonded to a reinforcing structure during hydroentanglement to provide a sheet material with improved mechanical properties, such as greater tensile strength.

There is a requirement to provide more durable sheet materials by increasing the strength of the mechanical bond between the body of fibres and the reinforcing structure.

WO 2014/099884 discloses methods of making an artificial leather substrate from leather waste. The artificial leather substrate comprises a composite web comprising leather waste mixed with a lightweight web and one or more lightweight webs that are crosslapped with the composite web. In some embodiments, the method of making the artificial leather substrate includes a hydroentangling process which is used to bond the lightweight webs and the composite web.

Methods for producing wipes or cloths by hydroentangling a nonwoven comprising splittable fibre are also described in WO 2017/032778, US 2004/010895, WO 2006/001739 and WO 2004/092472.

### BRIEF SUMMARY

The present invention is as set out in the independent claims.

According to various, but not necessarily all, examples of the disclosure there is provided method of forming a sheet material, the method comprising:
advancing an arrangement comprising a body of fibres and a reinforcing structure, wherein the body of fibres comprises leather fibres and the reinforcing structure comprises splittable fibres; and
subjecting the arrangement to successive hydroentanglement steps, wherein in each such hydroentanglement step the arrangement is exposed to high pressure jets of liquid over a surface of the arrangement, wherein subjecting the arrangement to successive hydroentanglement steps causes the fibres of the body of fibres to entangle with each other and causes a mechanical bond to form between the fibres of the body of fibres and the reinforcing structure, wherein the mechanical bond is caused by at least:
   some of the fibres of the body of fibres being pushed by the high-pressure jets of liquid into gaps in the reinforcing structure;
   at least some of the splittable fibres of the reinforcing structure splitting to form split fibres which reduces the space within the gaps such that the reinforcing structure constricts about fibres of the body of fibres which have been pushed in the gaps; and
   at least some of the fibres of the body of fibres entangling with at least some of the split fibres and at least some of the splittable fibres of the reinforcing structure.

Possibly, the method comprises subjecting the arrangement to successive hydroentanglement steps, wherein in each such hydroentanglement step the arrangement is exposed to high pressure jets of liquid over a surface of one of the faces of the arrangement, or over a surface of each of the respective faces of the arrangement.

Possibly, the method comprises applying a coating to a face of the arrangement following the successive hydroentanglement steps. The method may comprise applying a coating to both faces and/or either face of the arrangement. The coating may be a polymeric coating.

The body of fibres may comprise synthetic, natural fibres, or naturally derived fibres, or may comprise a blending of synthetic, natural fibres and/or naturally derived fibres. The body of fibres comprises leather fibres, and may comprise predominantly leather fibres. The body of fibres may comprise leather fibres and non-leather fibres. The non-leather fibres may be natural or synthetic.

The body of fibres may comprise splittable fibres. The body of fibres may comprise leather fibres and splittable fibres. The splittable fibres may be non-leather fibres.

Possibly, the arrangement comprises a body of fibres on only one face of the reinforcing structure. Alternatively, the arrangement may comprise a body of fibres on each face of the reinforcing structure.

Possibly, the reinforcing structure comprises a structure defined by a woven fabric, wherein the woven fabric comprises splittable fibres. Alternatively, the reinforcing structure may comprise a structure defined by a non-woven fabric, wherein the non-woven fabric comprises splittable fibres. Possibly, the reinforcing structure comprises a structure defined by a woven fabric and a non-woven fabric in combination, wherein the woven fabric and/or the non-woven fabric comprises splittable fibres. A non-woven fabric is defined as any textile structure other than a woven fabric, such as a knitted fabric or a needle-punched structure.

Possibly, the respective splittable fibres of the reinforcing structure comprise at least two different fibres arranged in distinct segments across the cross-section of the splittable fibre. The at least two different fibres may comprise polyester fibres and polyamide fibres. Possibly, the at least two different fibres comprise microfibres.

Possibly, the respective splittable fibres of the reinforcing structure comprise a plurality of fibres disposed in a resin. The plurality of fibres may comprise a plurality of different fibres. The plurality of fibres may comprise polyamide fibres, and the resin may comprise polyester resin. Possibly, the plurality of fibres comprises microfibres.

The arrangement may comprise a plurality of different respective bodies of fibres and/or a plurality of different respective reinforcing structures, provided at least one of the reinforcing structures comprises splittable fibres.

According to various, but not necessarily all, examples of the disclosure there is provided a sheet material made by the method of any of the above paragraphs.

Possibly, the sheet material is substantially without any adhesive bonding of the fibres. Possibly, the sheet material does not comprise adhesive bonding of the fibres.

According to various, but not necessarily all, examples of the disclosure there is provided a sheet material made by the method of any of the above paragraphs from an arrangement, the arrangement comprising:
a body of fibres; and
a reinforcing structure, wherein the reinforcing structure comprises splittable fibres.

According to various, but not necessarily all, examples of the disclosure not encompassed by the wording of the claims but considered as useful for understanding the invention, there is provided an arrangement, the arrangement comprising:
a body of fibres; and
a reinforcing structure, wherein the reinforcing structure comprises splittable fibres.

The body of fibres may comprise synthetic, natural fibres, or naturally derived fibres, or may comprise a blending of synthetic, natural fibres and/or naturally derived fibres. The body of fibres comprises leather fibres, and may comprise predominantly leather fibres. The body of fibres may comprise leather fibres and non-leather fibres. The non-leather fibres may be natural, naturally derived or synthetic.

The body of fibres may comprise splittable fibres. The body of fibres may comprise leather fibres and splittable fibres. The splittable fibres may be non-leather fibres.

Possibly, the arrangement comprises a body of fibres on only one face of the reinforcing structure. Alternatively, the arrangement may comprise a body of fibres on each face of the reinforcing structure.

Possibly, the reinforcing structure comprises a structure defined by a woven fabric, wherein the woven fabric comprises splittable fibres. Alternatively, the reinforcing structure may comprise a structure defined by a non-woven fabric, wherein the non-woven fabric comprises splittable fibres. Possibly, the reinforcing structure comprises a structure defined by a woven fabric and a non-woven fabric in combination, wherein the woven fabric and/or the non-woven fabric comprises splittable fibres. A non-woven fabric is defined as any textile structure other than a woven fabric, such as a knitted fabric or a needle-punched structure.

Possibly, the respective splittable fibres of the reinforcing structure comprise at least two different fibres arranged in distinct segments across the cross-section of the splittable fibre. The at least two different fibres may comprise polyester fibres and polyamide fibres. Possibly, the at least two different fibres comprise microfibres.

Possibly, the respective splittable fibres of the reinforcing structure comprise a plurality of fibres disposed in a resin. The plurality of fibres may comprise a plurality of different fibres. The plurality of fibres may comprise polyamide fibres, and the resin may comprise polyester resin. Possibly, the plurality of fibres comprises microfibres.

The arrangement may comprise a plurality of different respective bodies of fibres and/or a plurality of different respective reinforcing structures, provided at least one of the reinforcing structures comprises splittable fibres.

According to various, but not necessarily all, examples of the disclosure there is provided clothing, footwear, accessories or upholstery comprising a sheet material according to the above paragraphs.

According to various, but not necessarily all, examples of the disclosure not encompassed by the wording of the claims but considered as useful for understanding the invention, there is provided a composite material formed from a web by hydroentanglement, the web comprising:
a body of fibres; and
a reinforcing structure, wherein the reinforcing structure comprises splittable fibres. The composite material is a sheet material. The web is otherwise referred to as an arrangement.

According to various, but not necessarily all, examples of the disclosure not encompassed by the wording of the claims but considered as useful for understanding the invention, there is provided a web, the web comprising:
a body of fibres; and
a reinforcing structure, wherein the reinforcing structure comprises splittable fibres. The web is otherwise referred to as an arrangement.

According to various, but not necessarily all, examples of the disclosure not encompassed by the wording of the claims but considered as useful for understanding the invention, there is provided a composite material comprising:
a body of fibres interlocked with each other by entanglement; and
a reinforcing structure comprising split fibres formed from splittable fibres, wherein at least some of the fibres of the body are mechanically bonded to the reinforcing structure. The composite material is a sheet material.

According to various, but not necessarily all, examples of the disclosure not encompassed by the wording of the claims but considered as useful for understanding the invention, there is provided a method of forming a composite material, the method comprising:
forming a web comprising a body of fibres and a reinforcing structure, wherein the reinforcing structure comprises splittable fibres;
subjecting the web to a hydroentanglement step to form a composite material, wherein the web is exposed to high pressure jets of liquid over a surface of the web. The composite material is a sheet material. The web is otherwise referred to as an arrangement.

According to various, but not necessarily all, examples of the disclosure there may be provided examples as claimed in the appended claims.

### BRIEF DESCRIPTION

For a better understanding of various examples that are useful for understanding the detailed description, reference will now be made by way of example only to the accompanying drawings in which:
Fig. 1 illustrates a microscope image (x25) of a sheet material not according to examples of the disclosure;
Fig. 2 illustrate a microscope image (x25) of a sheet material according to examples of the disclosure;
Fig. 3 illustrates a cross sectional microscope image (x32) of a sheet material not according to examples of the disclosure comprising a coating; and
Fig. 4 illustrates a cross sectional microscope image (x32) of a sheet material according to examples of the disclosure comprising a coating.

### DETAILED DESCRIPTION

In examples of the disclosure, a method of forming a sheet material is provided. Furthermore, examples of the disclosure also provide a subsequently formed sheet material, and an arrangement from which a sheet material is formed.

The method comprises advancing an arrangement comprising a body of fibres and a reinforcing structure, wherein the reinforcing structure comprises splittable fibres.

The method further comprises subjecting the arrangement to successive hydroentanglement steps.

In each such hydroentanglement step the arrangement is exposed to high pressure jets of liquid over a surface of the arrangement. In some examples, the liquid is water.

Subjecting the arrangement to successive hydroentanglement steps causes the fibres of the body of fibres to entangle with each other. Accordingly, the fibres of the body interlock with each other by entanglement.

Subjecting the arrangement to successive hydroentanglement steps also causes a mechanical bond to form between the fibres of the body of fibres and the reinforcing structure.

The mechanical bond is caused by at least:
a) some of the fibres of the body of fibres being pushed by the high-pressure jets of liquid into gaps in the reinforcing structure;
b) at least some of the splittable fibres of the reinforcing structure splitting to form split fibres which reduces the space within the gaps such that the reinforcing structure constricts about fibres of the body of fibres which have been pushed in the gaps; and
c) at least some of the fibres of the body of fibres entangling with at least some of the split fibres and at least some of the splittable fibres of the reinforcing structure.

Split fibres may be microfibres. To constrict is for the reinforcing structure to compress, squeeze or tighten about the fibres of the body of fibres which have been pushed in the gaps.

The arrangement may comprise a plurality of different respective bodies of fibres and/or a plurality of different respective reinforcing structures, provided at least one of the reinforcing structures comprises splittable fibres.

In such arrangements, each respective body of fibre may have a different composition, for example, may comprise different fibres. In such arrangements, each reinforcing structure may have a different structure and/or composition, for example, may comprise a structure defined by a woven fabric and/or a non-woven fabric and/or may comprise different fibres. In such arrangements, not all the reinforcing structures need to comprise splittable fibres.

The sheet material is a composite material, i.e. a composite sheet material. The body of fibres comprised in the arrangement is a web. It is to be understood that the in-process strength for the body of fibres is well below the strength of the sheet material which results from the method according to examples of the disclosure.

The arrangement may be formed by conventional means, for example, by laying fibres onto a support to provide a body of fibres, followed by laying a reinforcing structure onto the body of fibres.

The body of fibres may be a non-woven web, and may be an air laid web, a wet laid web, a needle punched web, or a carded web.

The arrangement is subjected to successive hydroentanglement steps in an apparatus. In some examples, in the apparatus the arrangement is supported on a porous conveyor, which may be the support on which the arrangement is formed, and advanced through one or more treatment stations. In other examples, in the apparatus the arrangement is supported on a porous drum, which may be the support on which the arrangement is formed, and advanced through one or more treatment stations. The one or more treatment stations comprise liquid outlets for subjecting the arrangement to high pressure jets of such liquid.

In some examples, the method comprises subjecting the arrangement to successive hydroentanglement steps, wherein in each such hydroentanglement step the arrangement is exposed to high pressure jets of liquid over a surface of one of the faces of the arrangement. In other examples, the method comprises subjecting the arrangement to successive hydroentanglement steps, wherein in each such hydroentanglement step the arrangement is exposed to high pressure jets of liquid over a surface of each of the respective faces. Each of the successive hydroentanglement steps on one or each face of the arrangement may be carried out at a different treatment station in the apparatus. In such examples, the conveyor or the drum is arranged to support and advance the arrangement through each of the respective treatment stations.

The body of fibres may comprise synthetic, natural fibres, or naturally derived fibres. A non-exhaustive list of example natural fibres includes: wool, cotton, and flax. A non-exhaustive list of example naturally derived fibres includes leather, soybean, viscose and bamboo fibre. A non-exhaustive list of example synthetic fibres includes: nylon, polyester, acrylic. The synthetic fibres may be bi-composite fibres. In some examples, the body of fibres may comprise synthetic and natural fibres in combination.

The body of fibres may also comprise splittable fibres, which may be naturally derived or synthetic. In such examples, subjecting the arrangement to successive hydroentanglement steps also splits at least some of the splittable fibres, and entangles them.

In examples, such as the illustrated examples described below, wherein the body of fibres comprises leather fibres, the leather fibres may be derived from waste leather. A sheet material formed from an arrangement comprising a body of fibres, wherein the body of fibres comprises leather fibres may be an engineered leather product or used to form an engineered leather product.

In conventional sheet materials formed from an arrangement comprising a body of relatively short and fine fibres, such as leather fibres derived from waste leather, the strength of the mechanical bond between the fibres of the body and the reinforcing structure may be insufficient for a particular use of the sheet material, for instance in clothing, footwear, accessories or upholstery applications.

For illustrative purposes only, the fibre length resulting from disintegrating of waste leather in textile reclaiming equipment ranges from less than 1 mm with occasional fibres up to 20 mm. The fibre structure of natural leather before disintegration consists of closely interwoven bundles of Collagen fibres, which in turn consist of even finer fibrils, many of which become separated during the mechanical action. This results in a range of fibre diameters from about 100 microns for the bundles to very fine fibres below 1 micron for individual fibrils.

Without being bound by theory, such relatively short and fine fibres may be insufficiently anchored to the reinforcing structure and therefore readily dissociate therefrom.

As described above, in examples of the disclosure the reinforcing structure comprises splittable fibres.

In some examples, the splittable fibres of the reinforcing structure comprise at least two different fibres arranged in distinct segments across the cross-section of the splittable fibre. For example, the at least two different fibres may comprise polyester fibres and polyamide fibres, which may be microfibres.

Alternatively, in other examples the respective splittable fibres of the reinforcing structure comprise a plurality of fibres disposed in a resin, i.e. islands in the sea. The plurality of fibres may comprise a plurality of different fibres, which may be microfibres. Possibly, the plurality of fibres comprises polyamide fibres, and the resin comprises polyester resin.

The reinforcing structure may comprise a structure defined by a woven fabric comprising splittable fibres, or a non-woven fabric comprising splittable fibres. Alternatively, the reinforcing structure may comprise a structure defined by a combination of a woven fabric and a non-woven fabric, wherein the woven fabric and/or the non-woven fabric comprise splittable fibres. Irrespective of whether the structure is defined by a woven fabric, a non-woven fabric or a combination thereof, the structure comprises gaps between the splittable fibres. Accordingly, there are gaps in the reinforcing structure. As described in more detail below, in a woven fabric the gaps are defined at least by the openings in the regular mesh arrangement of a woven fabric. In a non-woven fabric, the gaps are at least defined by the voids between the discrete splittable fibres or discrete bundles of splittable fibres arranged randomly or irregularly in a non-woven fabric.

Woven and non-woven fabrics are formed from splittable fibres. Accordingly, the method may comprise forming woven and/or non-woven fabrics from splittable fibres.

During the process of successive hydroentanglement steps, as described above at least some of the fibres of the body of fibres are pushed by the high-pressure jets of liquid into gaps in the reinforcing structure. Furthermore, at least some of the splittable fibres split to form split fibres. Accordingly, and without being bound by theory, the size of the gaps in the reinforcing structure reduces as the splittable fibres split into split fibres, thus the reinforcing structure constricts about and holds more tightly the fibres of the body which extend into and/or through the gaps in the reinforcing structure. Fibres in the body also entangle with at least some of the split fibres and at least some of the splittable fibres in the reinforcing structure. Consequently, in the resulting sheet material, the fibres of the body are mechanically held more tightly to the reinforcing structure than in conventional sheet materials, as illustrated by the peel strength test data in Table 1 below.

**Table 1**

| **Sheet material** | **Peel strength test (N/cm)** |
|---|---|
| Comparative example | 13.6 N/cm |
| Example 1 | 15.0 N/cm |
| Example 2 | 27.5 N/cm |

In Table 1 above, the comparative example is a sheet material formed from an arrangement comprising a 240 GSM body of fibres comprising leather fibres, and a reinforcing structure comprising an 85 GSM non-splittable fibre woven fabric, for instance comprising non-splittable polyester fibres.

Example 1 is a sheet material formed from an arrangement comprising a 240 GSM body of fibres comprising leather fibres, and a reinforcing structure comprising an 85 GSM splittable fibre woven fabric.

Example 2 is a sheet material formed from an arrangement comprising a 140 GSM body of fibres comprising leather fibres, and a reinforcing structure comprising a 200 GSM splittable fibre non-woven fabric.

In examples 1 and 2 above, the splittable fibres of the reinforcing structure comprise polyester fibres and polyamide fibres arranged in distinct segments across the cross-section of the splittable fibre.

In each respective case, the hydroentanglement method employed was the same, wherein the arrangement is subjected to successive hydroentanglement steps on each face of the arrangement. The pressure of the jets of liquid, and also the time of exposure to the jets of liquid, is selected so that the liquid penetrates sufficiently deeply to drive fibres of the body into the reinforcing structure and also splits at least some of the splittable fibres of the reinforcing structure.

Accordingly, a sheet material formed from an arrangement, wherein the arrangement comprises a reinforcing structure which has a structure defined by a woven fabric, wherein the woven fabric comprises splittable fibres has a peel strength about 10% greater than a corresponding comparative example wherein the woven fabric does not comprise splittable fibres. An even greater peel strength increase (about 102%) is found if the reinforcing structure comprises a non-woven fabric comprising splittable fibres rather than a woven fabric comprising splittable fibres. Furthermore, in such examples the non-woven fabric imparts greater elasticity in the formed sheet material compared to sheet materials in which the reinforcing structure comprises a woven fabric.

In Table 1 above, the peel strength is a measure of the force required to pull apart the entangled body of fibres from the reinforcing structure.

The sheet material of examples 1 and 2, and the comparative example are formed from an arrangement comprising a body of fibres on only one face of the reinforcing structure. As described above, such an arrangement may be formed by conventional means, for example, by laying fibres on to a support to provide a body of fibres, followed by laying a reinforcing structure on to the body of fibres. In the subsequently formed sheet material following successive hydroentanglement steps, the reinforcing structure therefore acts as a reinforcing backing. In such examples, the reinforcing backing may define a top or bottom face of the sheet material.

In other examples, the arrangement may comprise a body of fibres on each face of the reinforcing structure, i.e. a sandwich type structure. In such examples, the arrangement may be formed by conventional means, for example, by laying fibres on to a support to provide a body of fibres, followed by laying a reinforcing structure on to the body of fibres, and then followed by laying further fibres on to the reinforcing structure to provide a second body of fibres. In the subsequently formed sheet material, the reinforcing structure therefore acts as a reinforcing core.

In other examples, the arrangement and subsequently formed sheet material may comprise a different number of reinforcing structures and bodies of fibres as described above.

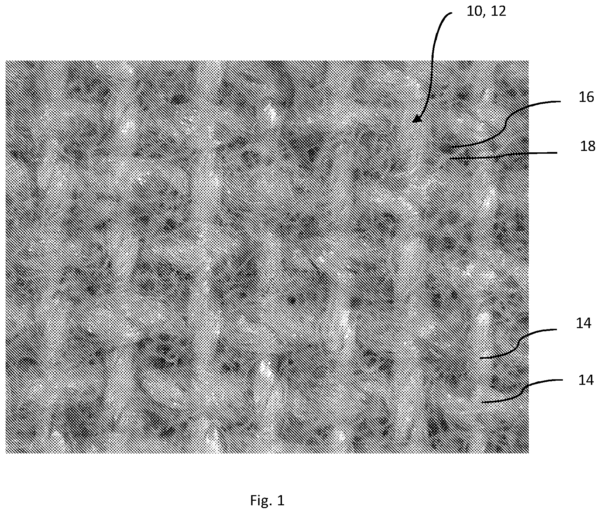

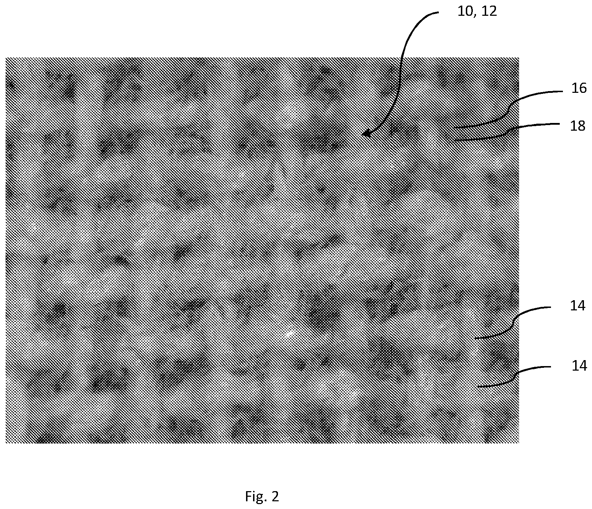

Figures 1 and 2 illustrate microscope (x25) images of a face of the sheet material of the comparative example and example 1, respectively. In the microscope images the reinforcing structure 10 is overlying the body of fibres. In each figure, the mesh structure 12 of the woven fabric of the reinforcing structure 10 (which is formed from interlaced threads 14 i.e. yarns at right angles) is visible. A plurality of gaps, i.e. openings 16 is defined in the mesh 12, and through the openings 16 can be seen leather fibres 18, some of which extend into and/or through the openings 16.

From a comparison of Figs 1 and 2, it is clear that on average the gaps 16 in the reinforcing structure 10 (i.e. the openings in the mesh) of Fig. 2 are smaller and less well defined than the gaps 16 (i.e. the openings of the mesh) in the reinforcing structure 10 of Fig. 1. As discussed above, during successive hydroentanglement steps as least some of the splittable fibres split in to split fibres which causes the gaps, i.e. openings to decrease in size. Without being bound by theory, it is believed that as the splittable fibres split, the interlaced threads spread out to occupy more space thereby closing up the gaps, i.e. openings 16 to an extent and thus decreasing their size on average. Accordingly, the space within the gaps is reduced and thus the reinforcing structure constricts about fibres of the body of fibres which have been pushed in the gaps.

Similarly, (but not illustrated) the gaps, i.e. voids defined between the discrete splittable fibres or discrete bundles of splittable fibres in the non-woven fabric of example 2 reduce in size as a consequence of the splittable fibres splitting during hydroentanglement for the same reasoning discussed above.

Accordingly, the fibres of the body are pushed into the gaps in the reinforcing structure by pressurized water jets during hydroentanglement and are held in the reinforcing structure more tightly than in the comparative example because of the reduced size of the gaps. Fibres of the body also entangle with at least some of the split fibres and splittable fibres of the reinforcing structure. Furthermore, additional smaller gaps in the reinforcing structure may be formed by the splitting of the splittable fibres in the reinforcing structure. Accordingly, the fibres of the body may also be pushed into these smaller gaps in the reinforcing structure by pressurized water jets during hydroentanglement and become anchored therein by entanglement and/or constriction of the reinforcing structure.

Consequently, in the resulting sheet material, the fibres of the body are mechanically held more tightly to the reinforcing structure than in conventional materials. This is reflected in the above peel strength data.

In some examples following hydroentanglement (i.e. downstream of hydroentanglement) the arrangement may be subject to conventional treatments prior to applying a coating (as described below), such as impregnation to soften, stiffen or improve the handling of the sheet material. In some instances, this process may lightly bond the fibres. However, such bonding contributes little to overall strength and product integrity depends primarily on entanglement.

Except for the aforesaid possible impregnation finishing treatments, no adhesive is necessary to structurally bond the fibres. Thus, the sheet material may be substantially without any adhesive bonding of the fibres, the mechanical interlocking of the fibres being the sole or predominant means of attaining and maintaining the integrity of the structure.

In other examples, following hydroentanglement the arrangement is not subject to conventional treatments, such as impregnation, prior to applying a coating. Accordingly, in such examples the sheet material does not comprise adhesive bonding of the fibres.

In some examples, the sheet material comprises a coating, for example a polymeric coating. Accordingly, the method may comprise applying such a coating to the arrangement following successive hydroentanglement steps.

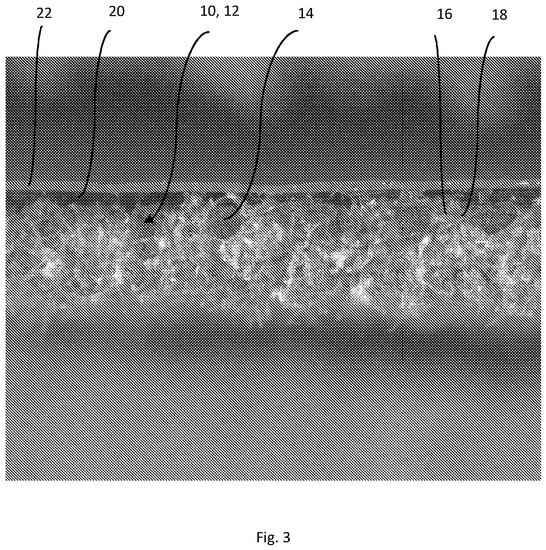

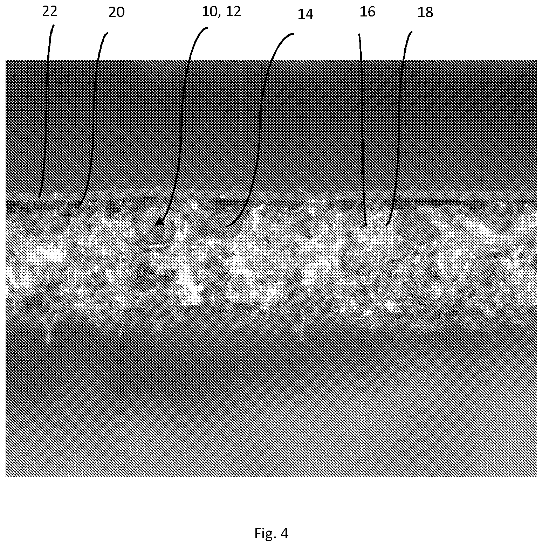

Figures 3 and 4 illustrate cross sectional magnifications (x32) of a sheet material comprising a polymeric coating 22 formed from the comparative example and example 1, respectively.

In each figure, the regular mesh 12 formed from interlaced threads 14 of the woven fabric of the reinforcing structure 10 is visible. Entangled leather fibres 18 are visible extending into and/or through the gaps, i.e. openings 16. Notably, there are fewer and smaller gaps 20 underlying the polymeric coating 22 in the sheet material illustrated in Fig. 4 than in the comparative example of Fig. 3. Without being bound by theory, this is because the entangled leather fibres 18 held by split fibres and splittable fibres fill the openings hence create a smooth surface and the splittable fibres in the threads 14 of the reinforcing structure have split to an extent during hydroentanglement to provide a greater surface area available for bonding to the polymeric coating 22, i.e. to provide more contact or anchorage points. Accordingly, a better bond is formed to the polymeric coating 22, which is reflected in the peel strength data provided in Table 2 below.

Table 2 provides peel strength test data with regard to pulling the polymeric coating away from the remainder of a respective sheet material.

**Table 2**

| **Sheet material** | **Peel strength test (N/cm)** |
|---|---|
| Comparative example | 8.34 N/cm |
| Example 1 | 12.38 N/cm |
| Example 2 | 29.1 N/cm |

In the comparative example, and examples 1 and 2, the coating has been applied as a layer on top of the reinforcing structure.

Sheet materials according to examples of the disclosure (coated or uncoated) may be treated by conventional procedures to produce materials, for example leatherlike materials, suitable, for example, for clothing, footwear, accessories and upholstery applications. Typical procedures include colouring, treating with softening oils, drying, buffing and surface finishing.

In sheet materials according to examples of the disclosure, the increased strength of the mechanical bond between the body of fibres and the reinforcing structure, and also the better binding to a coating if present, results in such materials, such as leatherlike materials for clothing, footwear, accessories and upholstery applications, being more durable.

There is thus described a method of forming a sheet material, a subsequently formed sheet material and an arrangement from which a sheet material is formed with a number of advantages as detailed above. Furthermore, in examples of the disclosure the sheet material does not comprise, or substantially does not comprise, adhesive bonding of the fibres, e.g. either the fibres of the body of fibres to the reinforcing structure or of the body of fibres. The mechanical interlocking is the sole or predominant means of attaining and maintaining the integrity of the sheet material. This is not only better for the environment, but also results in a softer more malleable sheet materials than materials formed using adhesives to attain and maintain the integrity of the material.

Although embodiments of the present invention have been described in the preceding paragraphs with reference to various examples, it should be appreciated that modifications to the examples given can be made without departing from the scope of the invention as claimed. For example, the yarn size in a woven fabric could be selected to provide different properties, for instance, to increase or decrease thickness and density. Furthermore, reinforcing structures formed from both woven fabric and non-woven fabric in combination could be provided, and each respective fabric may comprise different types of splittable fibres, and perhaps also non-splittable fibres in part of the reinforcing structures, to modulate the properties of the sheet material.

For example, a tissue layer may be applied to at least one face of the arrangement prior to hydroentanglement of that face.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a sub-class of the class that includes some but not all of the instances in the class. It is therefore implicitly disclosed that features described with reference to one example but not with reference to another example, can where possible be used in that other example but does not necessarily have to be used in that other example.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of forming a sheet material, the method comprising:
advancing an arrangement comprising a body of fibres and a reinforcing structure, wherein the body of fibres comprises leather fibres and the reinforcing structure comprises splittable fibres; and
subjecting the arrangement to successive hydroentanglement steps, wherein in each such hydroentanglement step the arrangement is exposed to high pressure jets of liquid over a surface of the arrangement, wherein subjecting the arrangement to successive hydroentanglement steps causes the fibres of the body of fibres to entangle with each other and causes a mechanical bond to form between the fibres of the body of fibres and the reinforcing structure, wherein the mechanical bond is caused by at least:
some of the fibres of the body of fibres being pushed by the high-pressure jets of liquid into gaps in the reinforcing structure;
at least some of the splittable fibres of the reinforcing structure splitting to form split fibres which reduces the space within the gaps such that the reinforcing structure constricts about fibres of the body of fibres which have been pushed in the gaps; and
at least some of the fibres of the body of fibres entangling with at least some of the split fibres and at least some of the splittable fibres of the reinforcing structure.

2. A method according to claim 1, wherein the method comprises applying a coating to a face of the arrangement following the successive hydroentanglement steps.

3. A method according to claim 2, wherein the coating is a polymeric coating.

4. A method according to any of the preceding claims, wherein the body of fibres comprises predominantly leather fibres.

5. A method according to any of the preceding claims, wherein the body of fibres comprises leather fibres and splittable fibres.

6. A method according to any of the preceding claims, wherein the arrangement comprises a body of fibres on only one face of the reinforcing structure.

7. A method according to any of claims 1 to 5, wherein the arrangement comprises a body of fibres on each face of the reinforcing structure.

8. A method according to any of the preceding claims, wherein the reinforcing structure comprises a structure defined by a woven fabric, wherein the woven fabric comprises splittable fibres.

9. A method according to any of claims 1 to 7, wherein the reinforcing structure comprises a structure defined by a woven fabric and a non-woven fabric in combination, wherein the woven fabric and/or the non-woven fabric comprises splittable fibres.

10. A method according to any of the preceding claims, wherein the respective splittable fibres of the reinforcing structure comprise at least two different fibres arranged in distinct segments across the cross-section of the splittable fibre, and optionally, the at least two different fibres comprise polyester fibres and polyamide fibres.

11. A method according to any of claims 1 to 9, wherein the respective splittable fibres of the reinforcing structure comprise a plurality of fibres disposed in a resin, and optionally, the plurality of fibres comprises polyamide fibres, and the resin comprises polyester resin.

12. A sheet material made by the method of any of claims 1 to 11.

13. A sheet material according to claim 12, wherein the sheet material is substantially without any adhesive bonding of the fibres.

14. A sheet material according to claim 12, wherein the sheet material does not comprise adhesive bonding of the fibres.

15. Clothing, footwear, accessories or upholstery comprising a sheet material according to any of claims 12 to 14.

## Patentansprüche

1. Verfahren zum Formen eines Schichtmaterials, wobei das Verfahren aufweist:
Fördern einer Anordnung, die einen Faserkörper und eine Verstärkungsstruktur aufweist, wobei der Faserkörper Lederfasern und die Verstärkungsstruktur spaltbare Fasern aufweist; und
Unterziehen der Anordnung aufeinanderfolgenden Hydroverflechtungsschritten, wobei in jedem solchen Hydroverflechtungsschritt die Anordnung Hochdruck-Flüssigkeitsstrahlen über einer Oberfläche der Anordnung ausgesetzt wird, wobei das Unterziehen der Anordnung aufeinanderfolgenden Hydroverflechtungsschritten bewirkt, dass sich die Fasern des Faserkörpers miteinander verflechten und bewirken, dass sich eine mechanische Verbindung zwischen den Fasern des Faserkörpers und der Verstärkungsstruktur bildet, wobei die mechanische Verbindung bewirkt wird durch mindestens:
einige der Fasern des Faserkörpers durch die Hochdruckstrahlen Flüssigkeitsstrahlen in Lücken in der Verstärkungsstruktur gedrückt werden;
zumindest einige der spaltbaren Fasern der Verstärkungsstruktur sich spalten, um Spaltfasern zu bilden, was den Raum innerhalb der Lücken reduziert, sodass die Verstärkungsstruktur sich um Fasern des Faserkörpers, die in die Lücken geschoben wurden, zusammenzieht; und
mindestens einige der Fasern des Faserkörpers sich mit mindestens einigen der gespaltenen Fasern und mindestens einigen der spaltbaren Fasern der Verstärkungsstruktur verflechten.

2. Verfahren nach Anspruch 1, **dadurch gekennzeichnet, dass** das Verfahren das Aufbringen einer Beschichtung auf eine Fläche der Anordnung nach den aufeinanderfolgenden Hydroverflechtungsschritten aufweist.

3. Verfahren nach Anspruch 2, **dadurch gekennzeichnet, dass** die Beschichtung eine polymere Beschichtung ist.

4. Verfahren nach einem der vorhergehenden Ansprüche, **dadurch gekennzeichnet, dass** der Faserkörper überwiegend Lederfasern aufweist.

5. Verfahren nach einem der vorhergehenden Ansprüche, **dadurch gekennzeichnet, dass** der Faserkörper Lederfasern und spaltbare Fasern aufweist.

6. Verfahren nach einem der vorangehenden Ansprüche, **dadurch gekennzeichnet, dass** die Anordnung einen Faserkörper auf nur einer Fläche der Verstärkungsstruktur umfasst.

7. Verfahren nach einem der Ansprüche 1 bis 5, **dadurch gekennzeichnet, dass** die Anordnung einen Faserkörper auf jeder Fläche der Verstärkungsstruktur aufweist.

8. Verfahren nach einem der vorhergehenden Ansprüche, **dadurch gekennzeichnet, dass** die Verstärkungsstruktur eine Struktur aufweist, die durch einen gewebten Stoff definiert ist, wobei der gewebte Stoff spaltbare Fasern aufweist.

9. Verfahren nach einem der Ansprüche 1 bis 7, **dadurch gekennzeichnet, dass** die Verstärkungsstruktur eine Struktur aufweist, die durch eine Kombination aus einem gewebten Stoff und einem nicht gewebten Stoff definiert ist, wobei der gewebte Stoff und/oder der nicht gewebte Stoff spaltbare Fasern aufweist.

10. Verfahren nach einem der vorhergehenden Ansprüche, **dadurch gekennzeichnet, dass** die jeweiligen spaltbaren Fasern der Verstärkungsstruktur mindestens zwei verschiedene Fasern aufweisen, die in verschiedenen Segmenten über den Querschnitt der spaltbaren Faser angeordnet sind, und wahlweise die mindestens zwei verschiedenen Fasern Polyesterfasern und Polyamidfasern aufweisen.

11. Verfahren nach einem der Ansprüche 1 bis 9, **dadurch gekennzeichnet, dass** die jeweiligen spaltbaren Fasern der Verstärkungsstruktur eine Vielzahl von Fasern aufweisen, die in einem Harz angeordnet sind, und wahlweise die Vielzahl von Fasern Polyamidfasern aufweist und das Harz ein Polyesterharz aufweist.

12. Schichtmaterial, **dadurch gekennzeichnet, dass** das Schichtmaterial nach dem Verfahren gemäß einem der Ansprüche 1 bis 11 hergestellt ist.

13. Schichtmaterial nach Anspruch 12, **dadurch gekennzeichnet, dass** das Schichtmaterial im Wesentlichen ohne jegliche Klebebindung der Fasern hergestellt ist.

14. Schichtmaterial nach Anspruch 12, **dadurch gekennzeichnet, dass** das Schichtmaterial keine Klebebindung der Fasern aufweist.

15. Bekleidung, Schuhwerk, Zubehör oder Polsterung, **dadurch gekennzeichnet, dass** die Bekleidung, das Schuhwerk, das Zubehör oder die Polsterung ein Schichtmaterial nach einem der Ansprüche 12 bis 14.

## Revendications

1. Un procédé de formation d'un matériau en feuille, le procédé comprenant :
le fait de faire avancer un agencement comprenant un corps de fibres et une structure de renforcement, le corps de fibres comprenant des fibres de cuir et la structure de renforcement comprenant des fibres séparables ; et
le fait de soumettre l'agencement à des étapes successives d'hydroenchevêtrement, l'agencement, dans chacune de ces étapes d'hydroenchevêtrement, étant exposé à des jets de liquide à haute pression sur une surface de l'agencement, la soumission de l'agencement à des étapes successives d'hydro-enchevêtrement amenant les fibres du corps de fibres à s'enchevêtrer entre elles et amenant une liaison mécanique à se former entre les fibres du corps de fibres et la structure de renforcement, la liaison mécanique étant provoquée par au moins :
le fait que certaines des fibres du corps de fibres soient poussées par les jets de liquide à haute pression dans des interstices de la structure de renforcement ;
le fait qu'au moins certaines des fibres séparables de la structure de renforcement se divisent pour former des fibres fendues qui réduisent l'espace à l'intérieur des interstices de telle sorte que la structure de renforcement se contracte autour des fibres du corps de fibres qui ont été poussées dans les interstices ; et
le fait qu'au moins certaines des fibres du corps de fibres s'enchevêtrent avec au moins certaines des fibres séparées et au moins certaines des fibres séparables de la structure de renforcement.

2. Un procédé selon la revendication 1, le procédé comprenant le fait d'appliquer un revêtement sur une face de l'agencement à la suite des étapes successives d'hydro-enchevêtrement.

3. Un procédé selon la revendication 2, dans lequel le revêtement est un revêtement polymère.

4. Un procédé selon l'une quelconque des revendications précédentes, dans lequel le corps de fibres comprend majoritairement des fibres de cuir.

5. Un procédé selon l'une quelconque des revendications précédentes, dans lequel le corps de fibres comprend des fibres de cuir et des fibres séparables.

6. Un procédé selon l'une quelconque des revendications précédentes, dans lequel l'agencement comprend un corps de fibres sur une seule face de la structure de renforcement.

7. Un procédé selon l'une quelconque des revendications 1 à 5, dans lequel l'agencement comprend un corps de fibres sur chaque face de la structure de renforcement.

8. Un procédé selon l'une quelconque des revendications précédentes, dans lequel la structure de renforcement comprend une structure définie par une étoffe tissée, l'étoffe tissée comprenant des fibres séparables.

9. Un procédé selon l'une quelconque des revendications 1 à 7, dans lequel la structure de renforcement comprend une structure définie par une étoffe tissée et une étoffe non tissée en combinaison, l'étoffe tissée et/ou l'étoffe non tissée comprenant des fibres séparables.

10. Un procédé selon l'une quelconque des revendications précédentes, dans lequel les fibres séparables respectives de la structure de renforcement comprennent au moins deux fibres différentes agencées en segments distincts à travers la section transversale de la fibre séparable, et optionnellement, les au moins deux fibres différentes comprennent des fibres de polyester et des fibres de polyamide.

11. Un procédé selon l'une quelconque des revendications 1 à 9, dans lequel les fibres séparables respectives de la structure de renforcement comprennent une pluralité de fibres disposées dans une résine, et optionnellement, la pluralité de fibres comprend des fibres de polyamide, et la résine comprend une résine polyester.

12. Un matériau en feuille fabriqué par le procédé selon l'une quelconque des revendications 1 à 11.

13. Un matériau en feuille selon la revendication 12, dans lequel le matériau en feuille est sensiblement dépourvu de toute liaison adhésive des fibres.

14. Un matériau en feuille selon la revendication 12, dans lequel le matériau en feuille ne comprend pas de liaison adhésive des fibres.

15. Vêtements, chaussures, accessoires ou tissus d'ameublement comprenant un matériau en feuille selon l'une quelconque des revendications 12 à 14.
